# EUROPÄISCHE PATENTSCHRIFT

(11) **EP 1 549 698 B1**
(45) Veröffentlichungstag und Bekanntmachung des Hinweises auf die Patenterteilung: **27.04.2011**
(21) Anmeldenummer: 02782709.6
(22) Anmeldetag: 12.10.2002
(51) Int. Cl.: C08J 5/04, C08K 3/18, C08K 11/00, F41H 5/04

(54) **GUSSFORMTEIL AUS EINEM VERGUSSWERKSTOFF**
CAST MOLDED PART MADE OF A CASTING MATERIAL
PI CE MOUL E PAR COUL E EN MAT RIAU DE COULAGE

(43) Veröffentlichungstag der Anmeldung: 06.07.2005
(73) Patentinhaber: Trickes, Norbert, 79588 Efringen-Kirchen (DE)
(72) Erfinder: TRICKES, Norbert, 79588 Efringen-Kirchen (DE)
(74) Vertreter: Patentanwälte Westphal, Mussgnug & Partner
(86) Internationale Anmeldenummer: PCT/DE2002/003865
(87) Internationale Veröffentlichungsnummer: WO 2004/035664

(56) Entgegenhaltungen:
- BE-A- 504 929
- DE-A- 2 229 405
- DE-A- 10 137 720

## Beschreibung

Die Erfindung hat ein mehrschichtiges Formteil aus einem Vergusswerkstoff gemäß der Erfindung besteht aus einer Mischung von drei Grundkomponenten.

Das Dokument DE 2 229 405 A beschreibt ein Verfahren zur Herstellung von Bauelementen für die Bauindustrie aus cellulose-haltigen Materialien und/oder Materialien unter Verwendung von Rückständen der Mineralöl- und/oder Kohlendestillation. Das Dokument BE 504 929 A beschreibt eine Schutzwand gegen Projektile, die im Wesentlichen aus Cellulose Kunstharz aufgebaut ist. Das Dokument DE 195 17 763 A1 beschreibt Formkörper, insbesondere für KfZ-Innenbauteile, für Vepackungsmaterialien, für Dämmmaterialien oder Möbelteile auf Basis von Celluloseacetat. Das Dokument DE 196 27 165 A1 beschreibt Polymerwerkstoffe auf Basis von Triglyceriden, Polycarbonsäureanhydriden und Polycarbonsäuren als Materialsubstituent für Kunststoff- und Metallrahmen, Dichtungsmaterial, Profilmaterial, Beschichtungen etc. Das Dokument DE 199 30 730 A1 offenbart ein Verfahren zur Herstellung von Faserverbundwerkstoffen zur Herstellung von Bauteilen für den Kraftfahrzeugbau, Flugzeugbau, die Bauindustrie den Fensterbau, die Möbelindustrie etc. Als Formteile, um mit großer Wucht auftreffende Teile, Bruchstücke oder Splitter von Bomben oder dergleichen Explosivkörpern aufzufangen und festzuhalten, sind die nach den oben geschilderten Verfahren hergestellten Materialien nicht besonders geeignet.

Angesichts der zunehmenden allgemeinen Unsicherheit durch Kannibalismus, Attentate und Anschläge auf Menschen und Gebäude hat der Erfinder erkannt, dass die bekannten Materialien zur Herstellung von Gebäuden jeder Art einen genügenden Schutz gegen Zerstörung oder Beschädigung durch mit großer Wucht auftreffende oder gar durchbrechende Teile, Splitter oder dgl. Bruchstücke von Bomben oder dgl. Explosivkörpern nicht bieten. Daher können die hinter Schutzwänden aus diesen Materialien sich aufhaltende Menschen keinen ausreichenden Schutz finden. Der Erfinder hat sich daher zum Ziel gesetzt, eine Werkstoffkombination zu finden, durch welche eine wesentlich verbesserte Schutzfunktion gegen solche Zerstörungen oder Beschädigungen geschaffen werden kann besitzt. Der Werkstoff soll in erster Linie die Aufgabe erfüllen, mit großer Wucht auftretende Teile, Bruchstücke oder Splitter von Bomben oder dgl. Explosivkörpern im Material des Vergusswerkstoffs aufzufangen und festzuhalten und das Durchschlagen von Schutzwänden und Austreten hinter diese zu vermeiden.

Um diese Aufgabe zu erfüllen soll der Vergusswerkstoff ein hohes Maß an mechanischem Schluckvermögen aufweisen, d.h. er soll auf Grund der zähen

Konsistenz seines Materials die auftreffenden geschossartigen Teile abbremsen und aufhalten und sie daran hindern, das Formteil aus dem Vergusswerkstoff zu durchdringen; vielmehr sollen diese Teile von dem zähen Material umschlossen und festgehalten werden. Wie sich gezeigt hat, verfügt der erfindungsgemässe Vergusswerkstoff überraschenderweise in hohem Masse über diese Eigenschaften und hat daher einen sehr hohen Schutzeffekt.

Die Grundkomponenten des Vergusswerkstoffes bestehen gemäss der Erfindung
a) aus 30 % bis 50 % Faserresten, Faserschnitzeln, Körnerresten, strohartigen Rückständen von Maiskolben sowie
b) aus 15 % bis 25 % Kalkspat, Gips, Quarz oder dgl. Mineralien in feingemahlener gleichmässiger Mischung, sowie
c) aus 35 % bis 45 % eines Kunststoffharzes wie Epoxydharz, Acrylharz oder Polyuhrethanharz.

Aus den Maiskolben sind zuvor die groben Maiskörner weitgehend entfernt worden.

Weitere Merkmale des Vergusswerkstoffs bestehen darin, dass die Grundkomponente a) gepresste Pellets in Form von Kügelchen von 2 bis 5 mm Durchmesser enthalten, welche Strohfasern, Schnitzeiteilchen und/oder Körnerreste sowie Bestandteile aus Gummi aufweisen, sowie ferner, dass die Grundkomponente a) ca. 35 % bis 40 % und die Grund-komponente b) ca. 18 % bis 24 % und die Grundkomponenten c) 38 % bis 43 % des Rauminhalts der Gesamtmischung betragen sowie, dass der Vergusswerkstoff beim Vergiessen dieser Komponenten Raumtemperatur aufweist. Während des Vergiessens dieser zuvor gut durchmischten Grundkomponenten können diese unter gleichzeitiger Druckanwendung weiter durchmischt und dadurch homogenisiert werden.

Die Gussformteile aus dem Vergusswerkstoff können als verschiedenartige Raumkörper ausgebildet sein, als ebener oder einachsig gekrümmter plattenförmiger Raumkörper, oder als räumlich gekrümmter plattenförmiger Raumkörper oder als polygonaler Raumkörper mit wenigstens fünf ebenen oder gekrümmten Begrenzungsflächen.

Zum Vergiessen des Vergusswerkstoffes können Giessformen dienen, welche zum Entnehmen der erstarrten Gussformteile zerstörbar oder zerlegbar sind.

Weiterbildungen des erfindungsgemässen Gussformteils können darin bestehen, dass sie aus einem mehrschichtigen Plattengebilde bestehen, welches Aussenschichten aus dem Vergusswerkstoff aufweist, welche Zwischenschichten aus hochfesten Panzerplatten beidseitig oder allseitig umschliessen oder dass sie als Mehrschicht-Plattengebilde gestaltet sind, welche Aussenschichten aus dem Vergusswerkstoff aufweisen, welche Zwischenschichten aus einem hochgradig geräuschdämpfenden Werkstoff beidseitig oder allseitig umschliessen.

## Patentansprüche

1. Mehrschichtiges Formteil, dessen Aussenschichten aus zähen, von mit grosser Wucht auftreffenden geschossartigen Teilen auffangenden und schluckfähigen, sowie festhaltenden Vergusswerkstoffen bestehen, welche von Zwischenschichten aus hochfestem Panzerplattenmaterial beidseitig und/oder allseitig umschlossen sind, wobei der Vergusswerkstoff aus drei Komponenten besteht und zwar
a) aus 30 Vol.-% bis 50 Vol.-% Faserresten, Faserschnitzeln und Körnerresten und strohartigen Rückständen von Maiskolben nach dem Entfernen der Maiskörner, sowie
b) aus 15 Vol.-% bis 25 Vol.-% Mineralien aus der Gruppe Kalkspat, Gips, Quarz in feingemahlener Mischung und
c) zu 35 Vol.-% bis 45 Vol.-% aus einem Kunststoffharz aus der Gruppe Epoxydharz und Acrylharz und Polyurethanharz.

2. Mehrschichtiges Gussformteil nach Anspruch 1, **dadurch gekennzeichnet, dass** die Grundkomponente a) gepresste Pellets in Form von Kügelchen von 2 bis 5 mm Durchmesser enthält, welche Strohfasern, Schnitzelteilchen und/oder Körnerreste sowie Bestandteile aus Gummi aufweisen.

3. Mehrschichtiges Gussformteil nach Anspruch 1, **dadurch gekennzeichnet, dass** die Grundkomponente a) ca. 35 Vol.-% bis 40 Vol.-% und die Grundkomponente b) ca. 18 Vol.-% bis 24 Vol.-% und die Grundkomponente c) ca. 38 Vol.-% bis 43 Vol.-% des Rauminhalts der Gesamtmischung betragen.

4. Mehrschichtiges Gussformteil nach Anspruch 1, **dadurch gekennzeichnet, dass** der Verguss-Werkstoff beim Vergiessen Raumtemperatur aufweist.

5. Mehrschichtiges Gussformteil nach Anspruch 1, **dadurch gekennzeichnet, dass** auf den Verguss-Werkstoff beim Vergiessen Druck ausgeübt wird.

6. Mehrschichtiges Gussformteil nach Anspruch 1, **dadurch gekennzeichnet, dass** die Bestandteile des Verguss-Werkstoffs vor dem Vergiessen durch Kneten homogenisiert werden.

7. Mehrschichtiges Gussformteil nach Anspruch 1, **dadurch gekennzeichnet, dass** es als ebener oder einachsig gekrümmter plattenförmiger Raumkörper, oder als räumlich gekrümmter plattenförmiger Raumkörper oder als polygonaler Raumkörper mit wenigstens fünf ebenen oder gekrümmten Begrenzungsflächen ausgebildet ist.

8. Mehrschichtiges Gussformteil nach einem der vorangestellten Ansprüche, **dadurch gekennzeichnet, dass** der fliessfähige Vergusswerkstoff einer Giessform zuführbar ist, welche nach dem Erstarren des Vergusswerkstoffs zum Entnehmen des Gussformteils zerstörbar ist.

9. Mehrschichtiges Gussformteil nach einem der vorangestellten Ansprüche, **dadurch gekennzeichnet, dass** der fliessfähige Vergusswerkstoff einer mehrteiligen und zum Entnehmen des Gussformteils zerlegbaren Giessform zuführbar ist.

10. Mehrschichtiges Gussformteil nach einem oder mehreren der vorgenannten Ansprüche, **dadurch gekennzeichnet, dass** es aus einem mehrschichtigen Plattengebilde besteht, bei dem die Aussenschichten der Platten aus dem Vergusswerkstoff bestehen, welche Zwischenschichten aus hochfesten Panzerplatten beidseitig oder allseitig umschliessen.

11. Mehrschichtiges Gussformteil nach Anspruch 10, **dadurch gekennzeichnet, dass** zwei oder mehr Zwischenschichten aus hochfesten Panzerplatten vorhanden sind, zwischen denen Schichten aus dem Vergusswerkstoff angeordnet und die aussenseitig oder allseitig von dem Vergusswerkstoff überzogen sind.

## Claims

1. A multiple-layer moulded element, the outer layers of which consist of tough, detaining casting materials which intercept bullet-like parts striking with great force and are suitable for absorbing and which are surrounded on both sides and/or on all sides by intermediate layers of high-strength armour-plated material, wherein the casting material consists of three components, namely
a) from 30 % by volume to 50 % by volume of fibre waste, chopped fibres and grain residues and straw-like residues of corncobs after the removal of the maize kernels, and
b) from 15 % by volume to 25 % by volume of the group of calcite, gypsum, quartz in a finely ground mixture and
c) up to from 35 % by volume to 45 % by volume of a synthetic resin from the group of epoxy resin and acrylic resin and polyurethane resin.

2. A multiple-layer moulded element according to claim 1, **characterized in that** the basic component a) contains pressed pellets in the form of beads of from 2 to 5 mm in diameter which have straw fibres, chopped particles and/or grain residues, as well as component of rubber.

3. A multiple-layer moulded element according to claim 1, **characterized in that** the basic component a) amounts to from approximately 35 % by volume to 40 % by volume, the basic component b) amounts to from approximately 18 % % by volume to 24 % by volume and the basic component c) amounts to from approximately 38 % by volume to 43 % by volume of the volume capacity of the total mixture.

4. A multiple-layer moulded element according to claim 1, **characterized in that** the casting material is at room temperature during the casting.

5. A multiple-layer moulded element according to claim 1, **characterized in that** pressure is exerted upon the casting material during the casting.

6. A multiple-layer moulded element according to claim 1, **characterized in that** the components of the casting material are homogenized by kneading before the casting.

7. A multiple-layer moulded element according to claim 1, **characterized in that** it is designed in the form of a plate-shaped spatial body which is flat or curved about one axis or in the form of a plate-shaped spatial body which is spatially curved or in the form of a polygonal spatial body with at least five flat or curved boundary faces.

8. A multiple-layer moulded element according to any one of the preceding claims, **characterized in that** the flowable casting material is capable of being supplied to a casting mould which is capable of being destroyed after the solidification of the casting material in order to remove the cast part.

9. A multiple-layer moulded element according to any one of the preceding claims, **characterized in that** the flowable casting material is capable of being supplied to a multiple-part casting mould which is capable of being dismantled in order to remove the cast part.

10. A multiple-layer moulded element according to one or more of the preceding claims, **characterized in that** it comprises a multiple-layer plate structure in which the outer layers of the plates consist of the casting material and embrace intermediate layers of high-strength armoured plates on both sides or all sides.

11. A multiple-layer moulded element according to claim 10, **characterized in that** two or more intermediate layers of high-strength armoured plates are present, between which layers of the casting material are arranged and which are coated on the outside or on all sides with the casting material.

## Revendications

1. Pièce moulée, coulée en plusieurs couches dont les couches extérieures sont constituées de matière coulée, dure, absorbant des morceaux de projectile arrivant avec une énergie importante et permettant de les absorber ainsi que des matériaux coulés, de retenue, qui sont entourés de couches intermédiaires, sur les deux faces et/ou de tous côtés en une matière de plaque de blindage très résistante,
- la matière coulée se composant de trois composants, à savoir :
a) entre 30 % et 50 % en volume de résidus de fibres, de morceaux de fibres ou de résidus de grains et résidus de paille, d'épis de maïs, après extraction des grains de maïs, et
b) de 15 % jusqu'à 25 % en volume de matière minérale du groupe comprenant la calcite, le gips, le quartz, sous la forme d'un mélange finement broyé,
c) de 35 % à 45 % en volume d'une résine de synthèse du groupe comprenant la résine époxyde, la résine acrylique, la résine de polyuréthane.

2. Pièce moulée coulée en plusieurs couches selon la revendication 1,
**caractérisée en ce que**
le composant de base comporte a) des boulettes pressées sous la forme de billes d'un diamètre de 2 à 5 mm, avec des fibres de paille, des particules de copeaux et/ou des résidus de grains, ainsi que des composants en caoutchouc.

3. Pièce moulée coulée en plusieurs couches selon la revendication 1,
**caractérisée en ce que**
les composants du corps de base a) représentant entre environ 35 % jusqu'à 40 % en volume et les composants de base b) représentent entre environ 18 % et 24 % en volume; et
les composants de base c) représentent entre 38 % et 43 % en volume du volume total du mélange.

4. Pièce moulée coulée en plusieurs couches selon la revendication 1,
**caractérisée en ce que**
la matière de coulée est à la température ambiante au moment de la coulée.

5. Pièce moulée coulée en plusieurs couches selon la revendication 1,
**caractérisée en ce que**
lors de la coulée, on exerce la pression sur la matière coulée.

6. Pièce moulée coulée en plusieurs couches selon la revendication 1,
**caractérisée en ce que**
les constituants de la matière sont homogénéisés par malaxage avant leur coulée.

7. Pièce moulée coulée en plusieurs couches selon la revendication 1,
**caractérisée en ce qu'**
elle est réalisée sous la forme d'un corps en volume, d'une plaque plane ou cintrée suivant un axe ou comme corps en volume en forme de plaque, cintrée dans l'espace ou comme corps en volume, polygonal, ayant au moins cinq surfaces limites planes ou cintrées.

8. Pièce moulée coulée en plusieurs couches selon la revendication 1,
**caractérisée en ce que**
la matière coulée, susceptible de fluer, est introduite dans un moule de coulée qui, après figeage de la matière coulée, est détruit pour extraire la pièce moulée.

9. Pièce moulée coulée en plusieurs couches selon la revendication 1,
**caractérisée en ce que**
la matière coulée, susceptible de fluer, est fournie à un moule de coulée qui se décompose en plusieurs parties pour extraire la pièce moulée.

10. Pièce moulée coulée en plusieurs couches selon la revendication 1,
**caractérisée en ce qu'**
elle se compose d'une structure de plaque à plusieurs couches selon laquelle, les couches extérieures des plaques sont formées de la matière coulée qui entoure des couches intermédiaires formées de plaques de blindage très résistantes appliquées sur les deux côtés ou sur tous les côtés.

11. Pièce moulée coulée en plusieurs couches selon la revendication 10,
**caractérisée par**
deux ou plusieurs couches intermédiaires en plaques de blindage très résistantes entre lesquelles on a la matière coulée et dont le côté extérieur ou dont tous les côtés, sont revêtus de la matière de coulée.
